# EUROPEAN PATENT SPECIFICATION

(11) **EP 3 811 645 B1**
(45) Date of publication and mention of the grant of the patent: **05.01.2022**
(21) Application number: 19732300.9
(22) Date of filing: 13.06.2019
(51) Int. Cl.: H04W 4/70, H04W 24/10, H04W 48/16, H04W 76/20, H04W 88/18

(54) **NETWORK EVENT REPORTING FOR PDN CONNECTIVITY**
NETZWERKEREIGNISMELDUNG FÜR PDN-KONNEKTIVITÄT
RAPPORT D'ÉVÉNEMENT DE RÉSEAU POUR CONNECTIVITÉ À UN RÉSEAU DE DONNÉES PAR PAQUETS (PDN)

(30) Priority: 21.06.2018 US 201862688185 P
(43) Date of publication of application: 28.04.2021
(73) Proprietor: TELEFONAKTIEBOLAGET LM ERICSSON (PUBL), 164 83 Stockholm (SE)
(72) Inventor: RÖNNEKE, Hans, Bertil, 434 34 Kungsbacka (SE)
(74) Representative: Ericsson
(86) International application number: PCT/EP2019/065619
(87) International publication number: WO 2019/243174

(56) References cited:
- WO-A1-2018/067956
- US-A1- 2012 113 959
- CISCO SYSTEMS INC: "Discussion on non IP data transfer over T6a", 3GPP DRAFT; C4-161290-DISC-NIDD-OVER-T6A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. Jeju, The Republic of Korea; 20160215 - 20160219 14 February 2016 (2016-02-14), XP051050767, Retrieved from the Internet: URL:http://www.3gpp.org/ftp/Meetings_3GPP_ SYNC/CT4/Docs/ [retrieved on 2016-02-14]

## Description

### Technical Field

The disclosure relates to performing network event reporting in a cellular communications network.

### Background

Third Generation Partnership Project (3GPP) operators have determined that it would be beneficial to use the 3GPP specified Monitoring Event Network Reporting as specified in 3GPP Technical Specification (TS) 23.682 v15.5.0 clause 4.5.6 and clause 5.6 to report when Packet Data Network (PDN) connectivity with a Cellular Internet of Things (CIoT) device is created (established) and deleted (disconnected). This can be used by Application Servers to initiate or stop communication with devices.

An intention to standardize this as part of 3GPP Release 16 was agreed upon in 3GPP working group SA2 in May 2018 in S2-186042. There currently exist certain challenge(s). There is an existing Monitoring Event report defined in TS 23.682 v15.5.0. However, this event report does not report creation and deletion of PDN Connections.

The document WO 2018/067956 A1 describes "Session Management with Relaying and Charging for Indirect Connection for Internet of Things Applications in 3GPP Network".

Therefore, additional mechanisms for reporting wireless device connectivity events are needed.

### Summary

The invention is defined by the independent claims 1 and 13.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications network, according to some embodiments of the present disclosure;
Figure 2 illustrates a wireless communication system represented as a Fifth Generation (5G) network architecture composed of core Network Functions (NFs), according to some embodiments of the present disclosure;
Figure 3A illustrates a 5G network architecture using service-based interfaces between the NFs in the control plane, according to some embodiments of the present disclosure;
Figure 3B shows an exemplary architecture for a UE used for Machine Type Communication (MTC) connecting to the 3GPP network, according to some embodiments of the present disclosure;
Figure 4 illustrates the operation of a node for performing such reporting, according to some embodiments of the present disclosure;
Figure 5 illustrates the procedure of configuring monitoring at the Home Subscriber Service (HSS) or the Mobility Management Entity/Serving General Packet Radio Service Support Node (MME/SGSN), according to some embodiments of the present disclosure;
Figure 6 illustrates the common procedure flow of reporting Monitoring Events that are detected by the MME/SGSN or HSS, according to some embodiments of the present disclosure;
Figure 7 is a schematic block diagram of a radio access node, according to some embodiments of the present disclosure;
Figure 8 is a schematic block diagram that illustrates a virtualized embodiment of the radio access node, according to some embodiments of the present disclosure;
Figure 9 is a schematic block diagram of the radio access node, according to some other embodiments of the present disclosure;
Figure 10 is a schematic block diagram of a UE, according to some embodiments of the present disclosure;
Figure 11 is a schematic block diagram of the UE, according to some other embodiments of the present disclosure;
Figure 12 illustrates a communication system that includes a telecommunication network, according to some embodiments of the present disclosure;
Figure 13 illustrates additional details regarding the host computer, base station, and UE in the communication system of Figure 16, according to some embodiments of the present disclosure; and
Figures 14 through 17 are flowcharts illustrating methods implemented in a communication system, according to some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network. Some examples of a core network node include, e.g., a Mobility Management Entity (MME), a Packet Data Network Gateway (P-GW), a Service Capability Exposure Function (SCEF), a Network Exposure Function (NEF), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device and a Cellular Internet of Things (CIoT) device and a Narrow Band Internet of Things (NB-IoT) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell;" however, particularly with respect to 5G NR concepts, beams may be used instead of cells and, as such, it is important to note that the concepts described herein are equally applicable to both cells and beams.

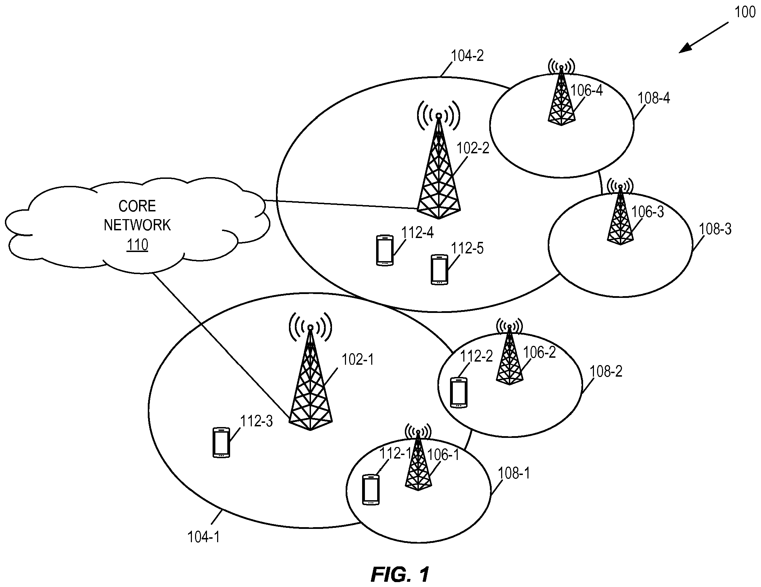

Figure 1 illustrates one example of a cellular communications network 100 according to some embodiments of the present disclosure. In the embodiments described herein, the cellular communications network 100 is a 5G NR network. In this example, the cellular communications network 100 includes base stations 102-1 and 102-2, which in LTE are referred to as eNBs and in 5G NR are referred to as gNBs, controlling corresponding macro cells 104-1 and 104-2. The base stations 102-1 and 102-2 are generally referred to herein collectively as base stations 102 and individually as base station 102. Likewise, the macro cells 104-1 and 104-2 are generally referred to herein collectively as macro cells 104 and individually as macro cell 104. The cellular communications network 100 may also include a number of low power nodes 106-1 through 106-4 controlling corresponding small cells 108-1 through 108-4. The low power nodes 106-1 through 106-4 can be small base stations (such as pico or femto base stations) or Remote Radio Heads (RRHs), or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The base stations 102 (and optionally the low power nodes 106) are connected to a core network 110.

The base stations 102 and the low power nodes 106 provide service to wireless devices 112-1 through 112-5 in the corresponding cells 104 and 108. The wireless devices 112-1 through 112-5 are generally referred to herein collectively as wireless devices 112 and individually as wireless device 112. The wireless devices 112 are also sometimes referred to herein as UEs.

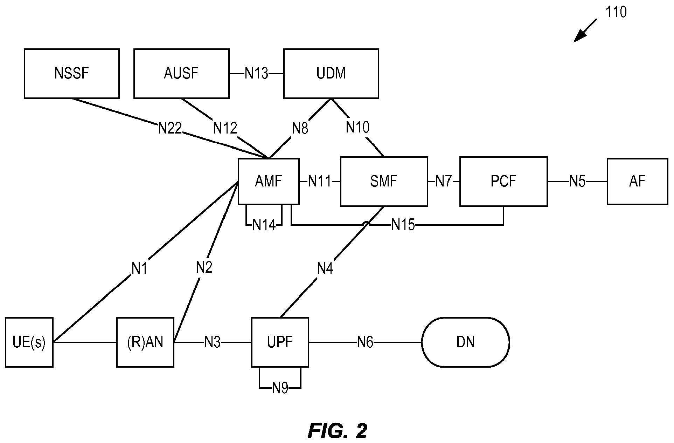

Figure 2 illustrates a wireless communication system represented as a 5G network architecture composed of core Network Functions (NFs), where interaction between any two NFs is represented by a point-to-point reference point/interface. Figure 2 can be viewed as one particular implementation of the system 100 of Figure 1.

Seen from the access side, the 5G network architecture shown in Figure 2 comprises a plurality of User Equipment (UEs) connected to either a Radio Access Network (RAN) or an Access Network (AN) as well as an Access and Mobility Management Function (AMF). Typically, the R(AN) comprises base stations, e.g., such as evolved Node Bs (eNBs) or 5G base stations (gNBs) or similar. Seen from the core network side, the 5G core NFs shown in Figure 2 include a Network Slice Selection Function (NSSF), an Authentication Server Function (AUSF), a Unified Data Management (UDM), an AMF, a Session Management Function (SMF), a Policy Control Function (PCF), and an Application Function (AF).

Reference point representations of the 5G network architecture are used to develop detailed call flows in the normative standardization. The N1 reference point is defined to carry signaling between the UE and AMF. The reference points for connecting between the AN and AMF and between the AN and User Plane Function (UPF) are defined as N2 and N3, respectively. There is a reference point, N11, between the AMF and SMF, which implies that the SMF is at least partly controlled by the AMF. N4 is used by the SMF and UPF so that the UPF can be set using the control signal generated by the SMF, and the UPF can report its state to the SMF. N9 is the reference point for the connection between different UPFs, and N14 is the reference point connecting between different AMFs, respectively. N15 and N7 are defined since the PCF applies policy to the AMF and SMF, respectively. N12 is required for the AMF to perform authentication of the UE. N8 and N10 are defined because the subscription data of the UE is required for the AMF and SMF.

The 5G core network aims at separating a user plane and a control plane. The user plane carries user traffic while the control plane carries signaling in the network. In Figure 2, the UPF is in the user plane and all other NFs, i.e., the AMF, SMF, PCF, AF, AUSF, and UDM, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF and SMF are independent functions in the control plane. Separated AMF and SMF allow independent evolution and scaling. Other control plane functions like the PCF and AUSF can be separated as shown in Figure 2. Modularized function design enables the 5G core network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

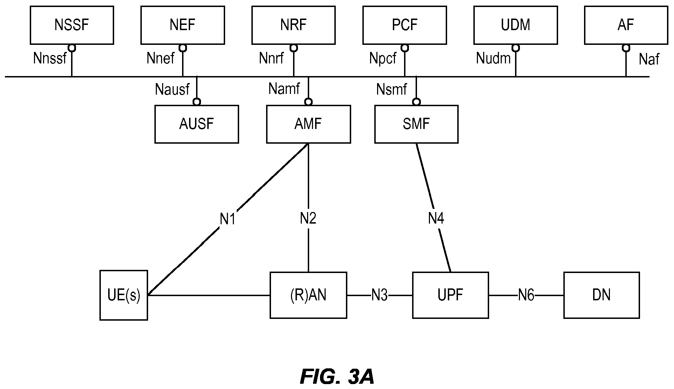

Figure 3A illustrates a 5G network architecture using service-based interfaces between the NFs in the control plane, instead of the point-to-point reference points/interfaces used in the 5G network architecture of Figure 2. However, the NFs described above with reference to Figure 2 correspond to the NFs shown in Figure 3A. The service(s) etc. that a NF provides to other authorized NFs can be exposed to the authorized NFs through the service-based interface. In Figure 3A the service based interfaces are indicated by the letter "N" followed by the name of the NF, e.g., Namf for the service based interface of the AMF and Nsmf for the service based interface of the SMF etc. The Network Exposure Function (NEF) and the Network Repository Function (NRF) in Figure 3A are not shown in Figure 2 discussed above. However, it should be clarified that all NFs depicted in Figure 2 can interact with the NEF and the NRF of Figure 3A as necessary, though not explicitly indicated in Figure 2.

Some properties of the NFs shown in Figures 2 and 3A may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support Quality of Service (QoS). Based on the information, the PCF determines policies about mobility and session management to make the AMF and SMF operate properly. The AUSF supports authentication function for UEs or similar and thus stores data for authentication of UEs or similar while the UDM stores subscription data of the UE. The Data Network (DN), not part of the 5G core network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

In some embodiments, the systems and methods disclosed herein are operated in EPC. In some embodiments, the end-to-end communications between the MTC Application in the UE and the MTC Application in the external network use services provided by the 3GPP system, and optionally services provided by a Services Capability Server (SCS).

The MTC Application in the external network is typically hosted by an Application Server (AS) and may make use of an SCS for additional value added services. The 3GPP system provides transport, subscriber management, and other communication services including various architectural enhancements motivated by, but not restricted to, MTC (e.g., control plane device triggering).

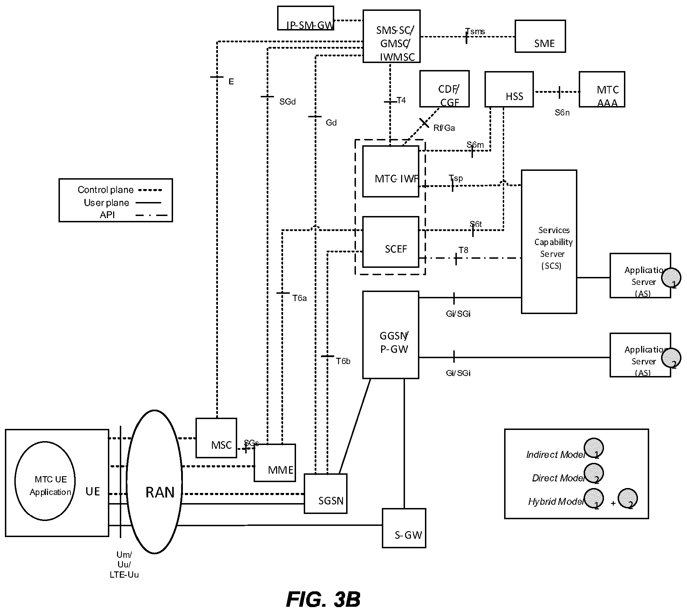

Figure 3B shows an exemplary architecture for a UE used for MTC connecting to the 3GPP network (Universal Terrestrial Radio Access Network (UTRAN), Evolved Universal Terrestrial Radio Access Network (E-UTRAN), Global System for Mobile Communications Enhanced Data Rates for Global System for Mobile Communications Evolution Radio Access Network (GERAN), etc.) via the Um/Uu/LTE-Uu interfaces. Figure 3B also shows the 3GPP network service capability exposure to SCS and AS. Reference point representations of the EPC network architecture are used to develop detailed call flows in the normative standardization. The T6a reference point is defined to carry signaling between the MME and SCEF. The S6t reference point is defined to carry signaling between the HSS and SCEF. The reference points for connecting between the RAN and MME and between the RAN and Serving Gateway/UPF are defined as S1-MME and S1-U, respectively. There is a reference point T8 defined between the SCEF and the SCS. The reference point T8 is commonly used also between the SCEF and the AS.

As discussed above, although there is an existing Monitoring Event report defined in TS 23.682 v15.5.0. However, this event report does not report creation and deletion of PDN Connections. It is also a potential problem that reporting of these parameters shall only be done if the Application Servers has requested the information. Therefore, additional mechanisms for reporting wireless device connectivity events are needed.

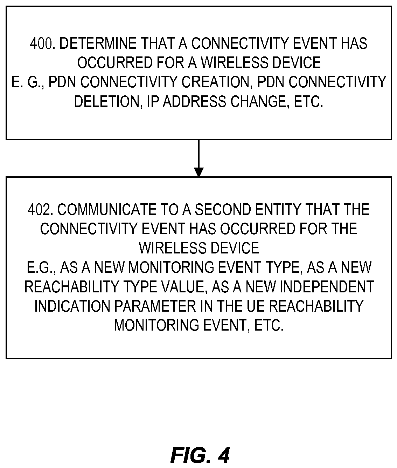

Systems and methods for reporting wireless device connectivity events are provided. Figure 4 illustrates the operation of a node for performing such reporting. In some embodiments, a method performed by a first node for reporting wireless device connectivity events includes determining that a connectivity event has occurred for a wireless device (step 400) and communicating to a second node that the connectivity event has occurred for the wireless device (step 402).

In some embodiments, the connectivity event might be a PDN Connectivity Creation, a PDN Connectivity Deletion, and/or IP address change for a PDN Connectivity.

In some embodiments, the communication may be as a new Monitoring Event Type, as a new Reachability Type value, and/or as a new independent indication parameter in the UE Reachability Monitoring event. These embodiments are not according to the invention as defined in the claims and are present for illustration purposes only.

In some embodiments, the second node is external to the 3GPP system (e.g., a SCS node or an AS). In some embodiments, the SCEFs (or the NEF for 5G) are just transit nodes for the exposure (reporting) the information. Reporting connectivity to an external node (i.e., "exposing") is very beneficial. In some embodiments, SCS and AS may be the secondary node.

The Monitoring Events feature is intended for monitoring of specific events in 3GPP systems and making such monitoring events information available via the SCEF or the NEF. It is comprised of means that allow the identification of the 3GPP network element suitable for configuring the specific events, the event detection, and the event reporting to the authorized users, e.g., for use by applications or logging, etc. If such an event is detected, the network might be configured to perform special actions, e.g., limit the UE access. Configuration and reporting of the following monitoring events may be supported:
- Monitoring the association of the UE and UICC and/or new IMSI-IMEI-SV association;
- UE reachability;
- Location of the UE, and change in location of the UE;

In some embodiments, location granularity for event requests, event reports, or both could be at cell level (CGI/ECGI), TA/RA level or other formats e.g., shapes (e.g., polygons, circles, etc.) or civic addresses (e.g., streets, districts, etc.).
- Loss of connectivity;
- Communication failure;
- Roaming status (i.e. Roaming or No Roaming) of the UE, and change in roaming status of the UE; and

In some embodiments, roaming status means whether the UE is in Home Public Land Mobile Network (HPLMN) or Visiting Public Land Mobile Network (VPLMN).
- Number of UEs present in a geographical area;
- Availability after DDN failure.

In some embodiments, configuration and reporting of a new monitoring event may be supported such as "PDN Connectivity Status". These embodiments are not according to the invention as defined in the claims and are present for illustration purposes only.

To support monitoring features in roaming scenarios, a roaming agreement needs to be made between the HPLMN and the VPLMN. The set of capabilities required for monitoring may be accessible via different 3GPP interfaces/nodes. Selection of 3GPP interface(s) to configure/report the event is dependent on the type of the event, operator configuration, required frequency of event reporting, application provided parameters in monitoring event request, etc.

Support for Monitoring Events can be offered either via HSS, MME/SGSN (as described in clause 4.5.6.2) or via PCRF (as described in clause 4.5.6.3). Based on operator policies, it shall be possible to configure Monitoring Events such that some Monitoring Event follows procedures in clause 4.5.6.2 while another Monitoring Event follows procedures in clause 4.5.6.3. SCEF shall not enable a given Monitoring Event for the same UE via both HSS/MME/SGSN, and PCRF. For the case of group based Monitoring Events, the Services Capability Server / Application Server (SCS/AS) (either the same SCS/AS or different SCSs/ASs) may configure a Monitor Event with different External Group Identifiers. If, in such a case, more than one External Group Identifier point to the same UE and no Group Reporting Guard Time was provided with any of the monitoring event configurations, the MME, HSS, and SCEF should not send duplicate reports of the same event for the same UE to the same destination.

In some embodiments, if the configuration of Monitoring Events uses signaling which was specified as part of another feature than the Monitoring feature, then the requirements on the HSS, MME/SGSN and PCRF as specified by that feature apply e.g., not to generate accounting information, not to verify SLA etc.

The Monitoring Events feature may be used to provide the SCS/AS with information when and how connectivity with the device is established, i.e. when PDN Connectivity is created or deleted or modified with respect to IP address. Information provided at creation or deletion of a PDN Connection includes IP address, PDN Type and APN. Optionally reporting can also be done for PDN Connections using T6a/T6b connection towards the SCEF.

In some embodiments, the T6a interface connects the SCEF with a serving MME while the T6b interface connects the SCEF with a serving SGSN. These interfaces support the following functionality: monitoring event configuration by the SCEF at the serving MME/SGSN; monitoring event reporting by the serving MME/SGSN to the SCEF; and NIDD to/from the serving MME.

In some embodiments, see Figure 3A, the Namf service definition is used by the NEF for Monitoring Event Configuration and the Nnef service definition is used by the AMF or SMF for Monitoring Event Reporting. The Naf service definition is used by the NEF for exposing the NIDD API towards the AF and SCS/AS.

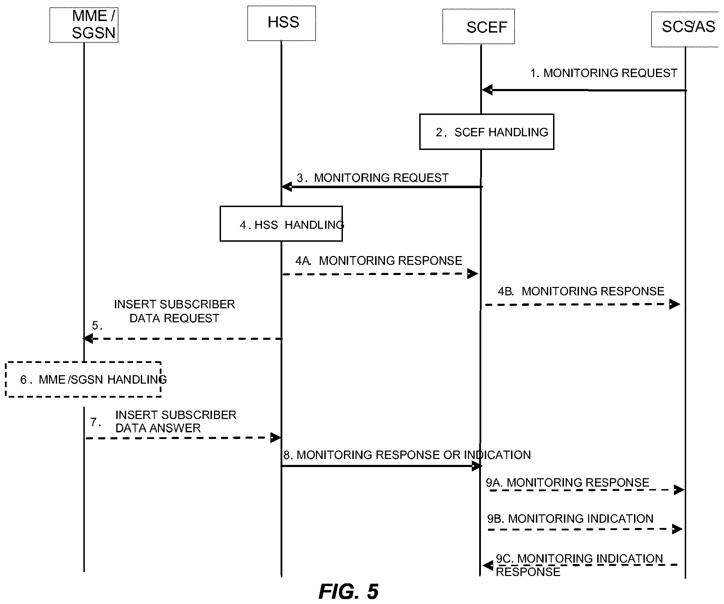

Figure 5 illustrates the procedure of configuring monitoring at the HSS or the MME/SGSN. The procedure is common for various Monitoring Event types. Common parameters for this procedure are detailed in clause 5.6.0. The steps and parameters specific to different Monitoring Event types are detailed in clauses 5.6.1.3 to 5.6.1.9.

The procedure is also used for deleting a previously configured Monitoring Event either as a standalone procedure or together with configuring a new Monitoring Event between the same SCEF and the same SCS/AS, or replacing a previously configured Monitoring Event with a new Monitoring Event of the same type between the same SCEF and the same SCS/AS, or for one-time reporting in case the Configured Monitoring Event is available at the configured node.
1. The SCS/AS sends a Monitoring Request (External Identifier or Mobile Station International Subscriber Directory Number (MSISDN) or External Group ID, SCS/AS Identifier Monitoring Type, Maximum Number of Reports, Monitoring Duration, T8 Destination Address, T8 Long Term Transaction Reference ID (TLTRI) for Deletion, Group Reporting Guard Time) message to the SCEF. The SCEF assigns a TLTRI that identifies the Monitoring Request. The SCS/AS may perform deletion of a previously configured Monitoring Event together with configuring a new Monitoring Event. If the SCS/AS wants to perform deletion of a previously configured Monitoring Event, then it shall include TLTRI for Deletion.

If the SCS/AS wants to configure a Monitoring Event for the group of UEs, the SCS/AS can send Monitoring Request message including External Group Identifier and Group Reporting Guard Time. If the SCS/AS includes External Group Identifier in the Monitoring Request message, External Identifier or MSISDN shall be ignored. A Group Reporting Guard Time is an optional parameter to indicate that aggregated Monitoring Event Reporting(s) which have been detected for the UEs in a group need to be sent to the SCS/AS once the Group Reporting Guard Time is expired.

In some embodiments, a relative priority scheme for the treatment of multiple SCS/AS Monitoring Requests, e.g., for deciding which requests to serve under overload condition, can be applied. This priority scheme is used locally by the SCEF, i.e. it is not used nor translated in procedures towards other functions.

2. The SCEF stores SCS/AS Identifier, T8 Destination Address, Monitoring Duration, Maximum Number of Reports and Group Reporting Guard Time, if provided. The SCEF stores the TLTRI, and also assigns it to an SCEF Reference ID. Based on operator policies, if either the SCS/AS is not authorized to perform this request (e.g., if the SLA does not allow for it) or the Monitoring Request is malformed or the SCS/AS has exceeded its quota or rate of submitting monitoring requests, the SCEF performs step 9 and provides a Cause value appropriately indicating the error. If the SCEF received a TLTRI for Deletion, the SCEF looks up the SCEF context pointed to by the TLTRI to derive the related SCEF Reference ID for Deletion.

The SCEF uses the Group Reporting Guard Time for a Monitoring Event Reporting for the group of UEs when the Monitoring Indication message is sent from the MME/SGSN to the SCEF. The SCEF sets the Group Reporting Guard Time for HSS less than the value for the SCEF received from SCS/AS in order to ensure to receive accumulated Monitoring Indication from HSS before the Group Reporting Guard Timer for SCEF is expired.

3. The SCEF sends a Monitoring Request (External Identifier or MSISDN or External Group Identifier, SCEF ID, SCEF Reference ID, Monitoring Type, Maximum Number of Reports, Monitoring Duration, SCEF Reference ID for Deletion, Chargeable Party Identifier, Group Reporting Guard Time) message to the HSS to configure the given Monitoring Event on the HSS and on the MME/SGSN, if required. If the External Group Identifier is included, External Identifier or MSISDN shall be ignored. For one-time Monitoring Request of Roaming Status, the SCEF does not indicate the Group Reporting Guard Time.

4. The HSS examines the Monitoring Request message, e.g., with regard to the existence of External Identifier or MSISDN or External Group Identifier, whether any included parameters are in the range acceptable for the operator, whether the monitoring event(s) is supported by the serving MME/SGSN, whether the group-basis monitoring event feature is supported by the serving MME/SGSN, or whether the monitoring event that shall be deleted is valid. The HSS optionally authorizes the chargeable party identified by Chargeable Party Identifier. If this check fails, the HSS follows step 8 and provides a Cause value indicating the reason for the failure condition to the SCEF.

The HSS stores the SCEF Reference ID, the SCEF ID, Maximum Number of Reports, Monitoring Duration and the SCEF Reference ID for Deletion as provided by the SCEF. For a Monitoring Request for a group, such parameters are stored for every group member UE.

The HSS uses the Group Reporting Guard Time for a Monitoring Event Reporting for the group of UEs when the Monitoring Indication message is sent from the HSS to the SCEF.

4A. For group based processing, if the HSS receives the Monitoring Request with an External Group Identifier, the HSS sends a Monitoring Response (SCEF Reference ID, Number of UEs, Cause) message to the SCEF to acknowledge acceptance of the Monitoring Request immediately before beginning the processing of individual UEs indicating that Group processing is in progress. The HSS deletes the monitoring event configuration identified by the SCEF Reference ID, if it was requested.

4B. The SCEF sends a Monitoring Response (TLTRI, Cause) message to the SCS/AS. The Cause value indicates progress of Group processing request.

5. If required by the specific Monitoring Type and when Monitoring Event(s) is supported by the serving MME/SGSN, the HSS sends an Insert Subscriber Data Request (Monitoring Type, SCEF ID, SCEF Reference ID, Maximum Number of Reports, Monitoring Duration, SCEF Reference ID for Deletion, Chargeable Party Identifier) message to the MME/SGSN for each individual UE and for each individual group member UE. If the Monitoring Request message is for a group of UEs, the HSS includes External ID or MSISDN in the monitoring event configuration and sends an Insert Subscriber Data Request message per UE to all the MME/SGSN(s) serving the members of the group.

6. If the MME/SGSN is configured to use an Inter-working SCEF (IWK-SCEF) for the PLMN of the SCEF then clause 5.6.6 applies. Otherwise, the MME/SGSN verifies the request, e.g., if the Monitoring Type is covered by a roaming agreement when the request is from another PLMN or whether it serves the SCEF Reference ID for Deletion and can delete it. If this check fails the MME/SGSN follows step 7 and provides a Cause value indicating the reason for the failure condition to the HSS. Based on operator policies, the MME/SGSN may also reject the request due to other reasons (e.g., overload or HSS has exceeded its quota or rate of submitting monitoring requests defined by an SLA).

The MME/SGSN stores the received parameters and starts to watch for the indicated Monitoring Event unless it is a One-time request and the Monitoring Event is available to the MME/SGSN at the time of sending Insert Subscriber Data Answer. The MME/SGSN deletes the monitoring configuration identified by the SCEF Reference ID for Deletion, if provided.

In some embodiments, the MME/SGSN will transfer the parameters stored for every monitoring task as part of its context information during an MME/SGSN change.

7. If the monitoring configuration is successful, the MME/SGSN sends an Insert Subscriber Data Answer (Cause) message to the HSS. If the requested Monitoring Event is available to the MME/SGSN at the time of sending Insert Subscriber Data Answer, then the MME/SGSN includes the Monitoring Event Report in the Insert Subscriber Data Answer message.

8. For single UE processing, the HSS sends a Monitoring Response (SCEF Reference ID, Cause) message to the SCEF to acknowledge acceptance of the Monitoring Request and the deletion of the identified monitoring event configuration, if it was requested. The HSS deletes the monitoring event configuration identified by the SCEF Reference ID, if it was requested. If the requested Monitoring Event is available to the HSS at the time of sending Monitoring Response message or was received from the MME/SGSN in step 7, then the HSS includes a Monitoring Event Report in the Monitoring Response message.

If it is a One-time request and the Insert Subscriber Data Answer includes a Monitoring Event Report, the HSS deletes the associated Monitoring Event configuration for the individual UE or for the individual group member UE.

For group based processing, if the HSS sent the Monitoring Response in step 4a, i.e., due to having received a Monitoring Request with an External Group Identifier and if the Group Reporting Guard Time was provided in the Monitoring Request, the HSS accumulates multiple responses for the UEs of the group within the Group Reporting Guard Time. After the Group Reporting Guard Time expiration, the HSS sends a Monitoring Indication with the accumulated responses and indicating whether the Monitoring Indication is an intermediate message or the last message for the group. The HSS includes UE identity(ies) and a Cause value indicating the reason for the failure in the message if the monitoring configuration of the group member failed.

In some embodiments, for the group-basis Monitoring Event configuration, the HSS may divide the accumulated Monitoring Indications into multiple messages due to e.g., limitation of the message size.

In the case of UE mobility, the HSS determines whether the new MME/SGSN supports requested Monitoring Event(s).

9A. For single UE processing, the SCEF sends a Monitoring Response (Cause, Monitoring Event Report) message to the SCS/AS to acknowledge acceptance of the Monitoring Request and the deletion of the identified monitoring event configuration, if it was requested. If the SCEF received a Monitoring Event Report, then it includes the Monitoring Event Report in the Monitoring Response message. If it is a One-time request for an individual UE and the Monitoring Response includes a Monitoring Event Report for the UE, the SCEF deletes the associated Monitoring Event configuration.

9B. For group based processing, if no Group Reporting Guard Time was set, then the SCEF sends the Monitor Indication (TLTRI, Cause, Monitoring Event Report) message to the SCS/AS as it receives them from the HSS. Otherwise, it accumulates Monitoring Events for the UEs of the group until the expiration of a Group Reporting Guard Time. Upon expiration, the SCEF sends a Monitoring Indication (TLTRI, Cause, list of (External Identifier or MSISDN, Monitoring Event Report)) message to the SCS/AS. A list of accumulated Monitoring Event Report for each UE identified by either External Identifier or MSISDN is also included.

If the Monitoring Request is a one-time request for a group of UEs, the SCEF uses the list of UE Identities that were received in step 8 and the Number of UEs parameter that was received in step 4a to check if the reports for all the individual group member UEs have been received. If the SCEF determines that a report for all individual group member UEs have been received, the SCEF sends a request to the HSS to delete the associated Monitoring Event configuration for the group.

9C. For each Monitoring Indication message received in step 9b, the SCS/AS sends a Monitoring Indication Response (Cause) message to the SCEF. Cause value reflects successful or unsuccessful acknowledgement of the Monitoring Indication message.

If the HSS detects that the current serving MME/SGSN cannot support a requested Monitoring Event or the group-basis monitoring event feature (e.g., after a UE mobility event), the HSS performs the procedures given below.
- Notify the SCEF that the configured Monitoring Event for the UE is considered to be suspended. The SCEF interprets this to mean that the network will temporarily be unable to serve the configured Monitoring Event. In this case:
- When the MME/SGSN for the UE changes (e.g., due to UE mobility), and the new MME/SGSN supports the suspended Monitoring Event, the HSS shall configure the new MME/SGSN with the Monitoring Event and notify the SCEF of resumption of the suspended Monitoring Event;
- If the criteria for Continuous Reporting expire while the Monitoring Event is suspended, the HSS and the SCEF shall independently delete the Monitoring Event.

### Specific Parameters for Monitoring Event: UE reachability

UE reachability indicates when the UE becomes reachable for sending either SMS or downlink data to the UE, which is detected when the UE transitions to Evolved Packet System Connection Management (ECM)-CONNECTED mode (for a UE using Power Saving Mode or extended idle mode DRX) or when the UE will become reachable for paging (for a UE using extended idle mode DRX). This monitoring event supports Reachabilty for SMS and Reachability for Data. Only a One-time Monitoring Request for Reachability for SMS is supported. The SCS/AS may include the following parameters in the Monitoring Event configuration request to the SCEF:
- Reachability Type indicating whether the request is for "Reachability for SMS", or "Reachability for Data", or both.
- Optionally, Maximum Latency indicating maximum delay acceptable for downlink data transfers. Maximum Latency is used for setting the periodic Tracking Area Update (TAU)/Routing Area Update (RAU) timer for the UE as it sets the maximum period after which a UE has to connect to the network again and thereby becomes reachable. Determined by the operator, low values for Maximum Latency may deactivate Power Saving Mode (PSM).
- Optionally, Maximum Response Time indicating the time for which the UE stays reachable to allow the SCS/AS to reliably deliver the required downlink data. Maximum Response Time is used for setting the Active Time for the UE. When the UE uses extended idle mode DRX, the Maximum Response Time is used to determine how early this monitoring event should be reported to the SCS/AS before the next Paging Occasion occurs.
- Optionally, suggested number of downlink packets indicating the number of packets that the Serving Gateway shall buffer in case the UE is not reachable.
- Optionally, PDN Connectivity Status Indication indicating monitoring events for when PDN Connectivity is being created and deleted.

As the Maximum Latency determines the order of magnitude of the Periodic Update timer, the network should ensure that this Maximum Latency and thereby the periodic TAU/RAU timers for the UE remain above lower bound values both for preserving the battery of the UE and for managing the signaling load of the network. So for UEs with battery constraints, it should not be a small time (e.g., on the order of only a few minutes). Even for UEs without battery constraints, trying to fulfil a Maximum Latency on the order of a few minutes can only apply to a limited number of UEs due to the cost of signaling induced by this feature.

In some embodiments, the Maximum Latency is on the order of one minute to multiple hours.

In some embodiments, the Network Parameter Configuration via SCEF feature (see clause 4.5.21) feature supersedes the option of setting the Reachability Type to "configuration" during configuration of the UE Reachability Monitoring Event which is no longer recommended.
1. The SCS/AS sets Monitoring Type to "UE Reachability", and includes Reachability Type, and any combination of the following optional parameters: Maximum Latency, Maximum Response Time, Suggested number of downlink packets, Idle Status Indication, and PDN Connectivity Status Indication prior to sending the Monitoring Request to the SCEF as in step 1 of clause 5.6.1.1.
2. The SCEF executes step 2 of clause 5.6.1.1. In addition, it checks whether the Maximum Latency (if included), the Maximum Response Time (if included), and the suggested number of downlink packets (if included) are within the range defined by operator policies. If not, or if the network does not support Idle Status Indication, then depending on operator policies, the SCEF rejects the request by performing step 9 of 5.6.1.1 with an appropriate cause value.
3. When "Reachability for SMS" is requested, the SCEF subscribes with the HSS by executing step 3 of 5.6.1.1 to get notified when the HSS is notified that the UE is reachable. The HSS performs the UE Reachability Notification Request procedure for getting a UE Activity Notification as described in TS 23.401 and/or uses the UE Reachability function as described in TS 23.060. The Mobile-Station-Not-Reachable-Flag (MNRF) handling is described in TS 23.040.

When "Reachability for Data" is requested, the SCEF executes step 3 of 5.6.1.1. In addition, if provided, it includes Maximum Latency, Maximum Response Time, Idle Status Indication, and PDN Connectivity Status Indication.

4. The HSS executes step 4 of clause 5.6.1.1. In addition, it checks whether the Maximum Latency, if provided, is within the range defined by operator policies, and if acceptable, the HSS sets the subscribed periodic RAU/TAU timer using the value of Maximum Latency, if it is provided. If the requested timer value is not acceptable, the HSS rejects the request by executing step 8, and provides a Cause value indicating the reason for the failure condition to the SCEF. In addition, the HSS checks whether the Suggested number of downlink packets is within the range defined by operator policies. If it is not, then the HSS rejects the request by executing step 8, and provides a Cause value indicating the reason for failure condition to the SCEF. If the subscribed periodic RAU/TAU timer was previously set by a different Monitoring Request identified by a different SCEF Reference ID for the same UE then, depending on operator configuration, the HSS either performs step 8 to reject the Monitoring Request with an appropriate Cause or accepts the request. In the case that the HSS accepts this request, then it cancels the previously accepted Monitoring Request by including the SCEF Reference ID of that Monitoring Request in step 8. If the HSS supports Idle Status Indication, then it includes it in step 5.

5. The HSS executes step 5 of clause 5.6.1.1. In addition, the HSS includes the subscribed periodic RAU/TAU timer (if modified), Maximum Response Time (if provided), Suggested number of downlink packets (if configured or provided), Idle Status Indication (if provided), and PDN Connectivity Status Indication (if provided).

6. The MME/SGSN executes step 6 of clause 5.6.1.1 and starts watching for the UE entering connected mode, or for PDN Connectivity being created or deleted (if PDN Connectivity Status Indication provided). At every subsequent TAU/RAU procedure, the MME/SGSN applies the subscribed periodic RAU/TAU timer.

7. Step 7 of clause 5.6.1.1 is executed.

8. Step 8 of clause 5.6.1.1 is executed. The HSS may include the SCEF Reference ID of previously accepted Monitoring Request which needs to be canceled.

9. Step 9 of clause 5.6.1.1 is executed. If SCEF Reference ID of previously configured Monitoring Event for cancellation is included in step 8, then the SCEF executes steps 2-5 of clause 5.6.9 using the associated TLTRI towards the associated SCS/AS.

### Reporting Procedure

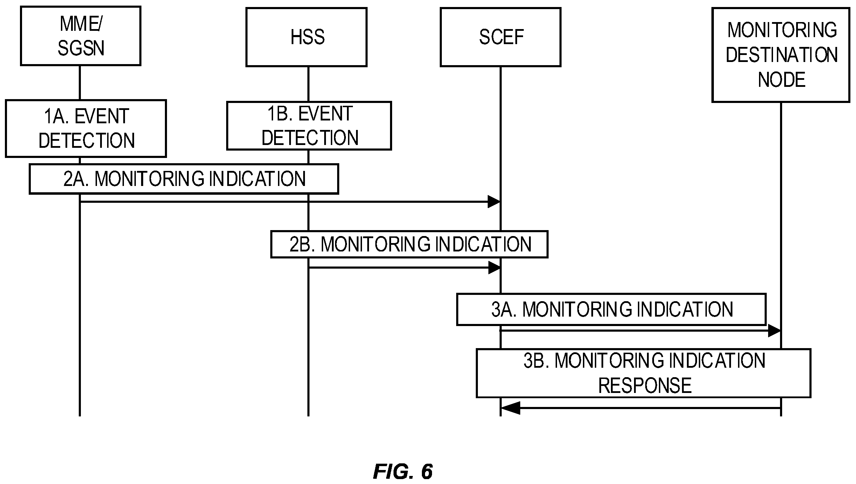

Figure 6 illustrates the common procedure flow of reporting Monitoring Events that are detected by the MME/SGSN or HSS. The steps specific to different Monitoring Event types are detailed in clauses 5.6.3.2 to 5.6.3.8.
1A. A Monitoring Event is detected by the MME/SGSN at which the Monitoring Event is configured.
1B. Either a Monitoring Event is detected by the HSS, or the HSS needs to inform the SCEF about the change of status (suspend/resume/cancel) of an ongoing monitoring if an event related with the change of monitoring support at the serving node, (e.g., lack of monitoring support in MME/SGSN or revocation of monitoring authorization) is detected in the HSS.
2A. The MME/SGSN sends a Monitoring Indication (SCEF Reference ID(s), Monitoring Event Report, User Identity) message to the SCEF. If the Monitoring Event configuration was triggered by a One-time Monitoring Request, then the Monitoring Event configuration is deleted by the MME/SGSN upon completion of this step. If the MME/SGSN has a Maximum Number of Reports stored for this monitoring task, the MME/SGSN shall decrease its value by one. If the Monitoring Event configuration includes User Identity, the MME/SGSN sends the Monitoring Indication message including the User Identity. So that the SCEF can determine what groups the report pertains to, multiple SCEF Reference IDs can be included if the UE is part of multiple groups that require the same monitoring indication.
2B. When reporting for an individual UE or individual Group Member UE, the HSS sends a Monitoring Indication (SCEF Reference ID(s), External ID or MSISDN, Monitoring Event Report) message to the SCEF. External ID or MSISDN are only included if the indication is associated with an individual Group Member UE. If the Monitoring Event configuration was triggered by a One-time Monitoring Request, then the Monitoring Event configuration for the individual UE and for the individual group member UE is deleted by the HSS upon completion of this step. If the HSS has a Maximum Number of Reports stored for this monitoring task, the HSS shall decrease its value by one. So that the SCEF can determine what groups the report pertains to, multiple SCEF Reference IDs can be included if the UE is part of multiple groups that require the same monitoring indication. If Group Reporting Guard Time was provided during the Monitoring Event configuration procedure, the HSS accumulates a Monitoring Event for the UEs of the group within the Group Reporting Guard Time. After the Group Reporting Guard Time expiration, the HSS send a Monitoring Indication (SCEF Reference ID, Monitoring Event Report Set, External Group ID, External ID(s) or MSISDN(s)) message to the SCEF. The External Group ID may be included in the message to indicate that the event has been detected for all group members. When the External Group ID is included in the indication, External ID(s) and MSISDN(s) are optional.

In some embodiments, for the group-basis Monitoring Event configuration, the HSS may divide the accumulated Monitoring Event Reports into multiple Monitoring indication messages due to the limitation of the message size.

3A. Using the SCEF Reference ID, the SCEF retrieves the associated TLTRI along with the T8 Destination Address.

If the TLTRI refers to a Monitoring Event Configuration for a single UE, the SCEF sends a Monitoring Indication (TLTRI, Cause, Monitoring Event Report) message to the identified destination. If the TLTRI refers to a group-based Monitoring Event configuration, and if no Group Reporting Guard Time was set, then the SCEF sends a Monitoring Indication (TLTRI(s), Cause, Monitoring Event Report) message to the identified destination. So that the SCEF can determine what groups the report pertains to, multiple TLTRIs can be included if the UE is part of multiple groups that require the same monitoring indication. If the TLTRI refers to a group-based Monitoring Event Configuration, and if Group Reporting Guard Time was provided during the Monitoring Event configuration procedure, then the SCEF accumulates Monitoring Event for the UEs of the group until the Group Reporting Guard Time expiry. Upon expiration of which, the SCEF sends a Monitoring Indication (TLTRI, Cause, list of (External Identifier or MSISDN, Monitoring Event Report)) message to the identified destination. A list of accumulated Monitoring Event Reports for each UE identified by either External Identifier or MSISDN is also included.

When the maximum number of reports is reached for a Continuous Monitoring Request for an individual UE or an individual group member UE, the SCEF requests the HSS (for monitoring events configured via HSS) or MME(s)/SGSN(s) (for monitoring events configured directly with the MME/SGSN) to delete the related monitoring event configuration for the individual UE or the individual group member UE and deletes also its associated Monitoring Event configuration according to the procedure of clause 5.6.1.1 step 3-8.

When the maximum number of reports is reached for a Continuous Monitoring Request for an individual group member UE, the SCEF uses the number of individual group member UE(s) (e.g., External Identifier or MSISDN) received in the step 2a or step 2b and the Number of UEs received in step 4a in clause 5.6.1.1 to determine if reporting for the group is complete. If the SCEF determines that reporting for the group is complete, the SCEF deletes the associated Monitoring Event configuration for the group.

In the case of a One time Monitoring Request configured via HSS for which a report is received from the MME/SGSN (step 2a) for an individual UE or for an individual group member UE, the SCEF requests the HSS to delete the related monitoring event configuration for the individual UE or the individual group member UE and deletes also its associated Monitoring Event configuration per the procedure of clause 5.6.1.1 step 3-8.

When the Monitoring Duration expires for a continuous Monitoring Request for an individual UE in the HSS, the MME or the SGSN, then each of these nodes shall locally delete the related monitoring event and the Monitoring Event configuration associated with it.

In the case of a One time Monitoring Request configured via HSS for which a report is received from the MME/SGSN (step 2a) or HSS (step 2b) for individual group member UE(s), the SCEF uses the number of individual group member UE(s) (e.g., External Identifier or MSISDN) received in the step 2a or step 2b and the Number of UEs received in step 4a in clause 5.6.1.1 to determine if reports for all the individual group member UE have been received. If the SCEF determines that reports have been received for all group member UEs, the SCEF deletes the associated Monitoring Event configuration for the group.

3B. For each Monitoring Indication message received in step 3a, the SCS/AS sends a Monitoring Indication Response (Cause) message to the SCEF. Cause value reflects successful or unsuccessful acknowledgement of Monitoring Indication message.

### Reporting Event: UE reachability

1A. This monitoring event is detected as of step 1a of clause 5.6.3.1, which is when the UE changes to connected mode, or when the UE will become reachable for paging (for a UE using extended idle mode DRX), or when the UE has created or deleted a PDN Connection (for a UE reachability Monitoring Event configured with PDN Connectivity Status Indication).

If Maximum Response Time was included in step 5 of clause 5.6.1.4, then the MME/SGSN keeps the corresponding S1-U/Iu-PS connections of the UE for a duration of at least the Maximum Response Time less the UE's PSM Active Timer value. If the UE uses extended idle mode DRX, the MME/SGSN takes the Maximum Response Time into account to determine when to report this monitoring event before the next Paging Occasion occurs.
1B. This monitoring event is detected as of step 1b of clause 5.6.3.1, which is when the HSS detects that the UE is reachable for SMS.
2A. Step 2A of clause 5.6.3.1 is executed. The Monitoring Event Report indicates if the event was caused by the UE changing to connected mode, or by the UE becoming reachable for paging, or creation or deletion of PDN Connectivity. The Monitoring Event Report indicates IP address, PDN Type and APN when reporting creation or deletion of PDN Connectivity (when PDN Connectivity Status Indication is set).
2B. Step 2B of clause 5.6.3.1 is executed.
3. Steps 3A-3B of clause 5.6.3.1 are executed. The Monitoring Event Report indicates if the event was caused by the UE changing to connected mode, or by the UE becoming reachable for paging, or creation or deletion of PDN Connectivity. The Monitoring Event Report indicates IP address, PDN Type and APN when reporting creation or deletion of PDN Connectivity (when PDN Connectivity Status Indication is set). If Idle Status Indication was not requested during Monitoring Event configuration, then the flow stops here.
4. UE transitions to idle mode as specified in TS 23.401.
5. If Idle Status Indication was requested during Monitoring Event configuration, and the MME/SGSN supports Idle Status Indication, then MME executes step 1a, and includes the time at which the UE transitioned into idle mode, its granted active time (if PSM is enabled), the eDRX cycle length (if extended idle mode DRX is enabled), the periodic TAU/RAU timer granted to the UE by the MME and the Suggested number of downlink packets if a value was provided to the S-GW in the message.
6. The SCEF executes steps 3A-3B of clause 5.6.3.1, and includes additional parameters specified in step 5 above.

### Reporting Event: UE reachability

1A. This monitoring event is detected as of step 1A of clause 5.6.8.1 on conditions as described in 5.6.3.3 step 1A.

If Maximum Response Time was included in step 5 of clause 5.6.6.4, then the MME/SGSN keeps the corresponding S1-U/Iu-PS connections of the UE for a duration of at least the Maximum Response Time less the UE's PSM Active Timer value. If the UE uses extended idle mode DRX, the MME/SGSN takes the Maximum Response Time into account to determine when to report this monitoring event before the next Paging Occasion occurs.

2. Dependent on MME/SGSN configuration, step 2a or 2c of clause 5.6.8.1 is executed. The Monitoring Event Report indicates if the event was caused by the UE changing to connected mode or by the UE becoming reachable for paging.

3. Step 3 of clause 5.6.8.1 is executed.

As discussed above, in some embodiments, configuration and reporting of a new monitoring event may be supported such as "PDN Connectivity Status". In some embodiments, 5.6.1.x Specific Parameters for Monitoring Event: PDN Connectivity Status may be added. This monitoring event allows the SCS/AS to be notified of PDN Connectivity status changes of the UE, i.e. when PDN Connections are created or deleted for the UE. The PDN Connectivity Status monitoring events report include the IP address allocated for the UE PDN connection, the PDN Type and the APN. This may be used e.g., for AS to initiate communication with the UE, or to know when communication is no longer possible.

These embodiments are not according to the invention as defined in the claims and are present for illustration purposes only.

In some embodiments, no reporting is done for PDN Connections using the T6a/T6b connection towards the SCEF. However, in other embodiments, such as possible alternative embodiment in step 1 below, this reporting may occur.
1. The SCS/AS sets Monitoring Type to "PDN Connectivity Status" and sends the Monitoring Request to the SCEF as in step 1 of clause 5.6.1.1. The SCS/AS may optionally add a value for the Monitoring Duration and/or the Maximum Number of Reports parameters. Absence of both Maximum Number of Reports and Monitoring Duration makes the Monitoring Request an ongoing event that needs explicit deletion (see clause 5.6.1 for a description of Monitoring Event Deletion procedures) to cancel further reports. In some embodiments, this opens the possibility to make this a continuous activity. Optionally the SCS/AS includes an indication (e.g., "NIDD presence reporting indicator" that reporting shall also be done for API based (i.e. SCEF T8 NIDD based - Non-IP Data Delivery) communication with the UE, i.e. PDN Connections using T6a/T6b connection towards the SCEF (see 3GPP TS 23.682 clause 5.13).
2. The SCEF executes step 2 of clause 5.6.1.1. Absence of both Maximum Number of Reports and Monitoring Duration makes the Monitoring Request an ongoing event that needs explicit deletion (see clause 5.6.1 for a description of Monitoring Event Deletion procedures) to cancel further reports.
3. The SCEF executes step 3 of clause 5.6.1.1. Absence of both Maximum Number of Reports and Monitoring Duration makes the Monitoring Request an ongoing event that needs explicit deletion (see clause 5.6.1 for a description of Monitoring Event Deletion procedures) to cancel further reports. Optionally, the SCEF includes an indication (e.g., "NIDD presence reporting indicator" that reporting shall also be done for API based (i.e. SCEF T8 NIDD based - Non-IP Data Delivery) communication with the UE, i.e. PDN Connections using T6a/T6b connection towards the SCEF (see 3GPP TS 23.682 clause 5.13).
4-5. Steps 4-5 of clause 5.6.1.1 are executed. The HSS shall check if the SCS/AS is authorized to use the PDN Connectivity Status Monitoring Event and/or if operator policies allow the PDN Connectivity Status Monitoring Event usage for this subscriber (e.g., the subscription/UE is for CIoT). If it is not, then the HSS rejects the request by executing step 8 and provides a Cause value indicating the reason for failure condition to the SCEF. In some embodiments, this is authorization to expose IP address to SCS/AS. The HSS stores the "NIDD presence reporting indicator" in step 4, if present, and sends to MME in step 5, if present.
6. The MME/SGSN executes step 6 of clause 5.6.1.1 and starts watching for PDN Connectivity Status events. If the UE was previously attached with PDN connections but is now detached, and the UE context is still stored in the MME, the monitoring event is configured in the MME. If the MME has locally purged the UE context, the MME responds in step 8 with an appropriate Cause code.
7-9. Steps 7-9 of clause 5.6.1.1 are executed.

Also, in some embodiments, 5.6.3.x Reporting Event: PDN Connectivity Status may be added. These embodiments are not according to the invention as defined in the claims and are present for illustration purposes only.
1A. This monitoring event is detected as of step 1A of clause 5.6.3.1, which is when a new PDN connection is created for the UE, or when a PDN connection is deleted for the UE, or if the IP address is changed for an existing PDN connection. No reporting is done for PDN Connections using T6a/T6b connection towards the SCEF. In an alternative embodiment, the MME makes reporting also for PDN Connections using T6a/T6b connection towards the SCEF if an indicator has been stored in the monitoring event configuration in the MME e.g., a "NIDD presence reporting indicator".
2A. Step 2A of clause 5.6.3.1 is executed. The Monitoring Event Report indicates if the event was caused by a creation or deletion of a PDN Connection (or IP address change if this exists). In some embodiments, the Monitoring Event Report indicates IP address, PDN Type, APN, and the new PDN Connectivity Status i.e. "created" or "deleted" (or "IP address changed" if exists). For Non-IP, the reported IP address may be the address allocated for SGi PtP tunneling based on UDP/IP (see TS 23.401, clause 4.3.17.8.3.3.2). In an alternative embodiment, when the MME makes reporting also for PDN Connections using T6a/T6b connection towards the SCEF, the monitoring event report (monitoring indication) also includes a parameter, e.g., "Connectivity method" if the PDN connection is a T8 NIDD API connection or not. Alternately, it includes a parameter, e.g., "Connectivity method" with slightly different format taking two values, a) T8 NIDD API connection, or b) SGi connection.

In some embodiments, at reporting of the IP address for IPv6, the MME may report the IPv6 prefix when the full IPv6 address is not available. For IPv4, the MME may, depending on configuration, be capable of reporting the public IPv4 address when NAT is in use, or leave the IP address field empty when the IPv4 address is private and not applicable for the SCS/AS.

3. Steps 3A-3B of clause 5.6.3.1 are executed. In an alternative embodiment, the monitoring event report (monitoring indication) also includes a parameter, e.g., "Connectivity method" if the PDN connection is a T8 NIDD API connection or not. Alternately, it includes a parameter e.g., "Connectivity method" with slightly different format taking two values, a) T8 NIDD API connection, or b) SGi connection.

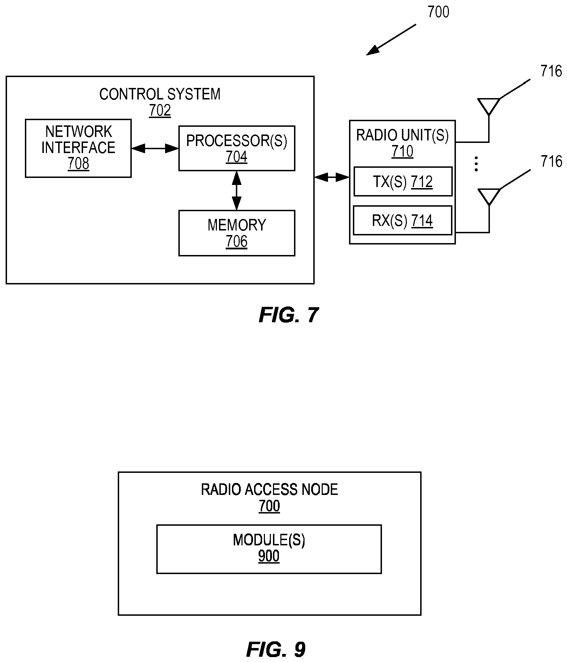

Figure 7 is a schematic block diagram of a radio access node 700 according to some embodiments of the present disclosure. The radio access node 700 may be, for example, a base station 102 or 106. As illustrated, the radio access node 700 includes a control system 702 that includes one or more processors 704 (e.g., Central Processing Units (CPUs), Application Specific Integrated Circuits (ASICs), Field Programmable Gate Arrays (FPGAs), and/or the like), memory 706, and a network interface 708. The one or more processors 704 are also referred to herein as processing circuitry. In addition, the radio access node 700 includes one or more radio units 710 that each includes one or more transmitters 712 and one or more receivers 714 coupled to one or more antennas 716. The radio units 710 may be referred to or be part of radio interface circuitry. In some embodiments, the radio unit(s) 710 is external to the control system 702 and connected to the control system 702 via, e.g., a wired connection (e.g., an optical cable). However, in some other embodiments, the radio unit(s) 710 and potentially the antenna(s) 716 are integrated together with the control system 702. The one or more processors 704 operate to provide one or more functions of a radio access node 700 as described herein. In some embodiments, the function(s) are implemented in software that is stored, e.g., in the memory 706 and executed by the one or more processors 704.

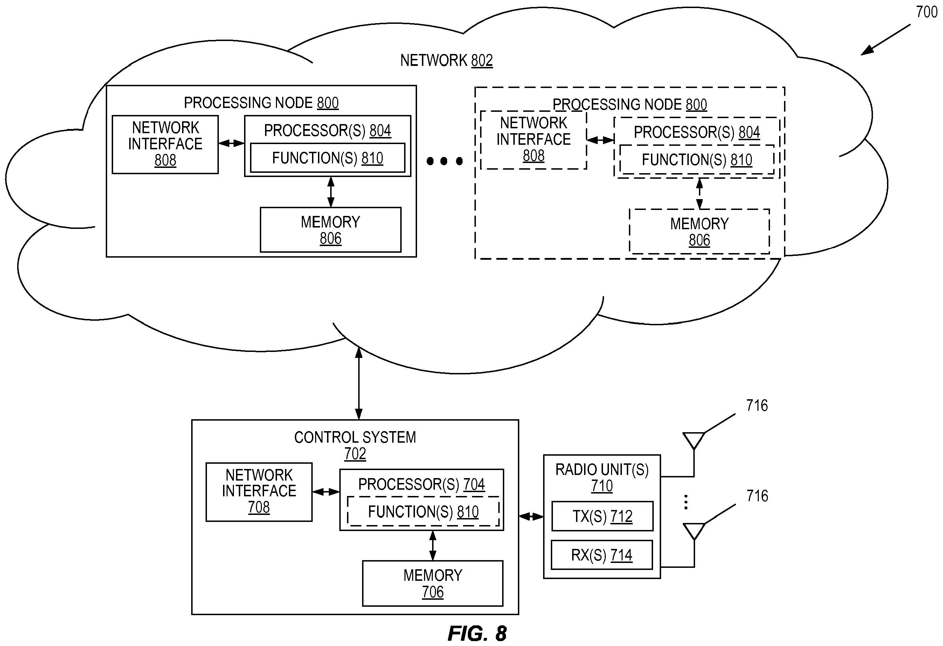

Figure 8 is a schematic block diagram that illustrates a virtualized embodiment of the radio access node 700 according to some embodiments of the present disclosure. This discussion is equally applicable to other types of network nodes. Further, other types of network nodes may have similar virtualized architectures.

As used herein, a "virtualized" radio access node is an implementation of the radio access node 700 in which at least a portion of the functionality of the radio access node 700 is implemented as a virtual component(s) (e.g., via a virtual machine(s) executing on a physical processing node(s) in a network(s)). As illustrated, in this example, the radio access node 700 includes the control system 702 that includes the one or more processors 704 (e.g., CPUs, ASICs, FPGAs, and/or the like), the memory 706, and the network interface 708 and the one or more radio units 710 that each includes the one or more transmitters 712 and the one or more receivers 714 coupled to the one or more antennas 716, as described above. The control system 702 is connected to the radio unit(s) 710 via, for example, an optical cable or the like. The control system 702 is connected to one or more processing nodes 800 coupled to or included as part of a network(s) 802 via the network interface 708. Each processing node 800 includes one or more processors 804 (e.g., CPUs, ASICs, FPGAs, and/or the like), memory 806, and a network interface 808.

In this example, functions 810 of the radio access node 700 described herein are implemented at the one or more processing nodes 800 or distributed across the control system 702 and the one or more processing nodes 800 in any desired manner. In some particular embodiments, some or all of the functions 810 of the radio access node 700 described herein are implemented as virtual components executed by one or more virtual machines implemented in a virtual environment(s) hosted by the processing node(s) 800. As will be appreciated by one of ordinary skill in the art, additional signaling or communication between the processing node(s) 800 and the control system 702 is used in order to carry out at least some of the desired functions 810. Notably, in some embodiments, the control system 702 may not be included, in which case the radio unit(s) 710 communicate directly with the processing node(s) 800 via an appropriate network interface(s).

In some embodiments, a computer program including instructions which, when executed by at least one processor, causes the at least one processor to carry out the functionality of radio access node 700 or a node (e.g., a processing node 800) implementing one or more of the functions 810 of the radio access node 700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 9 is a schematic block diagram of the radio access node 700 according to some other embodiments of the present disclosure. The radio access node 700 includes one or more modules 900, each of which is implemented in software. The module(s) 900 provide the functionality of the radio access node 700 described herein. This discussion is equally applicable to the processing node 800 of Figure 8 where the modules 900 may be implemented at one of the processing nodes 800 or distributed across multiple processing nodes 800 and/or distributed across the processing node(s) 800 and the control system 702.

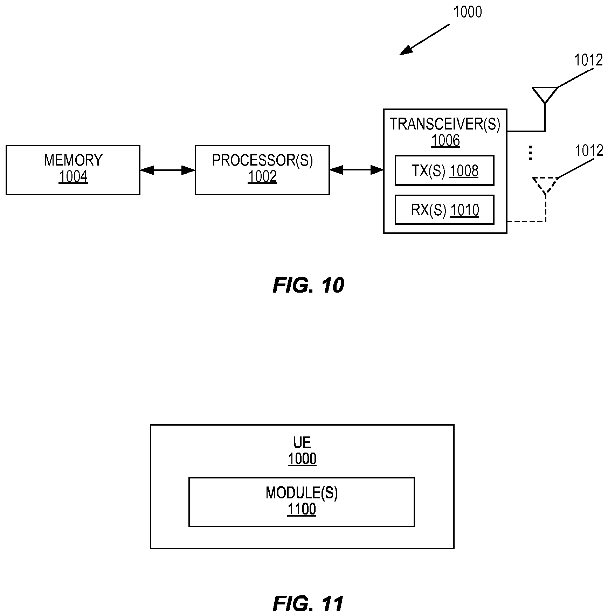

Figure 10 is a schematic block diagram of a UE 1000 according to some embodiments of the present disclosure. As illustrated, the UE 1000 includes one or more processors 1002 (e.g., CPUs, ASICs, FPGAs, and/or the like), memory 1004, and one or more transceivers 1006 each including one or more transmitters 1008 and one or more receivers 1010 coupled to one or more antennas 1012. The transceiver(s) 1006 includes radio-front end circuitry connected to the antenna(s) 1012 that is configured to condition signals communicated between the antenna(s) 1012 and the processor(s) 1002, as will be appreciated by on of ordinary skill in the art. The processors 1002 are also referred to herein as processing circuitry. The transceivers 1006 are also referred to herein as radio circuitry. In some embodiments, the functionality of the UE 1000 described above may be fully or partially implemented in software that is, e.g., stored in the memory 1004 and executed by the processor(s) 1002. Note that the UE 1000 may include additional components not illustrated in Figure 10 such as, e.g., one or more user interface components (e.g., an input/output interface including a display, buttons, a touch screen, a microphone, a speaker(s), and/or the like and/or any other components for allowing input of information into the UE 1000 and/or allowing output of information from the UE 1000), a power supply (e.g., a battery and associated power circuitry), etc.

In some embodiments, a computer program including instructions which, when executed by at least one processor, causes the at least one processor to carry out the functionality of the UE 1000 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 11 is a schematic block diagram of the UE 1000 according to some other embodiments of the present disclosure. The UE 1000 includes one or more modules 1100, each of which is implemented in software. The module(s) 1100 provide the functionality of the UE 1000 described herein.

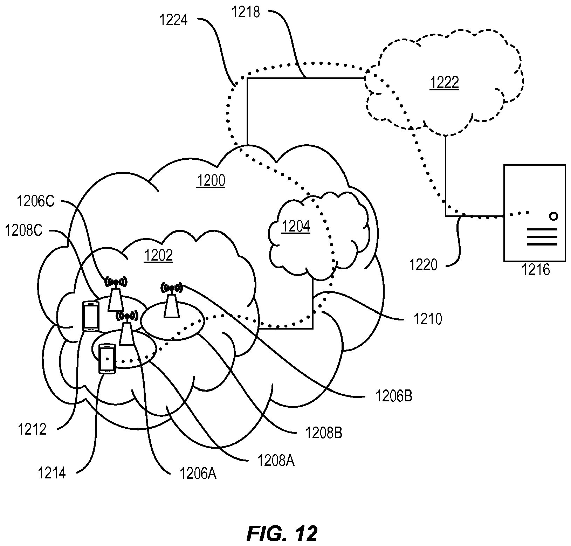

With reference to Figure 12, in accordance with an embodiment, a communication system includes a telecommunication network 1200, such as a 3GPP-type cellular network, which comprises an access network 1202, such as a RAN, and a core network 1204. The access network 1202 comprises a plurality of base stations 1206A, 1206B, 1206C, such as NBs, eNBs, gNBs, or other types of wireless Access Points (APs), each defining a corresponding coverage area 1208A, 1208B, 1208C. Each base station 1206A, 1206B, 1206C is connectable to the core network 1204 over a wired or wireless connection 1210. A first UE 1212 located in coverage area 1208C is configured to wirelessly connect to, or be paged by, the corresponding base station 1206C. A second UE 1214 in coverage area 1208A is wirelessly connectable to the corresponding base station 1206A. While a plurality of UEs 1212, 1214 are illustrated in this example, the disclosed embodiments are equally applicable to a situation where a sole UE is in the coverage area or where a sole UE is connecting to the corresponding base station 1206.

The telecommunication network 1200 is itself connected to a host computer 1216, which may be embodied in the hardware and/or software of a standalone server, a cloud-implemented server, a distributed server, or as processing resources in a server farm. The host computer 1216 may be under the ownership or control of a service provider, or may be operated by the service provider or on behalf of the service provider. Connections 1218 and 1220 between the telecommunication network 1200 and the host computer 1216 may extend directly from the core network 1204 to the host computer 1216 or may go via an optional intermediate network 1222. The intermediate network 1222 may be one of, or a combination of more than one of, a public, private, or hosted network; the intermediate network 1222, if any, may be a backbone network or the Internet; in particular, the intermediate network 1222 may comprise two or more sub-networks (not shown).

The communication system of Figure 12 as a whole enables connectivity between the connected UEs 1212, 1214 and the host computer 1216. The connectivity may be described as an Over-the-Top (OTT) connection 1224. The host computer 1216 and the connected UEs 1212, 1214 are configured to communicate data and/or signaling via the OTT connection 1224, using the access network 1202, the core network 1204, any intermediate network 1222, and possible further infrastructure (not shown) as intermediaries. The OTT connection 1224 may be transparent in the sense that the participating communication devices through which the OTT connection 1224 passes are unaware of routing of uplink and downlink communications. For example, the base station 1206 may not or need not be informed about the past routing of an incoming downlink communication with data originating from the host computer 1216 to be forwarded (e.g., handed over) to a connected UE 1212. Similarly, the base station 1206 need not be aware of the future routing of an outgoing uplink communication originating from the UE 1212 towards the host computer 1216.

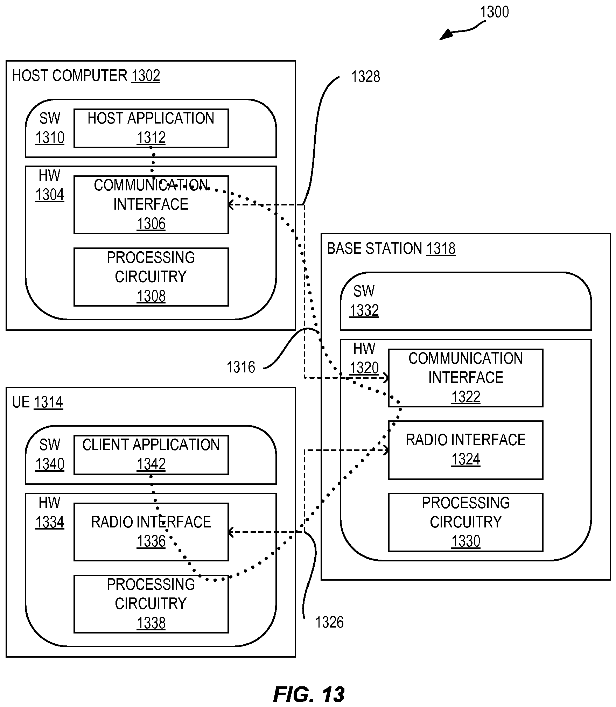

Example implementations, in accordance with an embodiment, of the UE, base station, and host computer discussed in the preceding paragraphs will now be described with reference to Figure 13. In a communication system 1300, a host computer 1302 comprises hardware 1304 including a communication interface 1306 configured to set up and maintain a wired or wireless connection with an interface of a different communication device of the communication system 1300. The host computer 1302 further comprises processing circuitry 1308, which may have storage and/or processing capabilities. In particular, the processing circuitry 1308 may comprise one or more programmable processors, ASICs, FPGAs, or combinations of these (not shown) adapted to execute instructions. The host computer 1302 further comprises software 1310, which is stored in or accessible by the host computer 1302 and executable by the processing circuitry 1308. The software 1310 includes a host application 1312. The host application 1312 may be operable to provide a service to a remote user, such as a UE 1314 connecting via an OTT connection 1316 terminating at the UE 1314 and the host computer 1302. In providing the service to the remote user, the host application 1312 may provide user data which is transmitted using the OTT connection 1316.

The communication system 1300 further includes a base station 1318 provided in a telecommunication system and comprising hardware 1320 enabling it to communicate with the host computer 1302 and with the UE 1314. The hardware 1320 may include a communication interface 1322 for setting up and maintaining a wired or wireless connection with an interface of a different communication device of the communication system 1300, as well as a radio interface 1324 for setting up and maintaining at least a wireless connection 1326 with the UE 1314 located in a coverage area (not shown in Figure 13) served by the base station 1318. The communication interface 1322 may be configured to facilitate a connection 1328 to the host computer 1302. The connection 1328 may be direct or it may pass through a core network (not shown in Figure 13) of the telecommunication system and/or through one or more intermediate networks outside the telecommunication system. In the embodiment shown, the hardware 1320 of the base station 1318 further includes processing circuitry 1330, which may comprise one or more programmable processors, ASICs, FPGAs, or combinations of these (not shown) adapted to execute instructions. The base station 1318 further has software 1332 stored internally or accessible via an external connection.

The communication system 1300 further includes the UE 1314 already referred to. The UE's 1314 hardware 1334 may include a radio interface 1336 configured to set up and maintain a wireless connection 1326 with a base station serving a coverage area in which the UE 1314 is currently located. The hardware 1334 of the UE 1314 further includes processing circuitry 1338, which may comprise one or more programmable processors, ASICs, FPGAs, or combinations of these (not shown) adapted to execute instructions. The UE 1314 further comprises software 1340, which is stored in or accessible by the UE 1314 and executable by the processing circuitry 1338. The software 1340 includes a client application 1342. The client application 1342 may be operable to provide a service to a human or non-human user via the UE 1314, with the support of the host computer 1302. In the host computer 1302, the executing host application 1312 may communicate with the executing client application 1342 via the OTT connection 1316 terminating at the UE 1314 and the host computer 1302. In providing the service to the user, the client application 1342 may receive request data from the host application 1312 and provide user data in response to the request data. The OTT connection 1316 may transfer both the request data and the user data. The client application 1342 may interact with the user to generate the user data that it provides.

It is noted that the host computer 1302, the base station 1318, and the UE 1314 illustrated in Figure 13 may be similar or identical to the host computer 1216, one of the base stations 1206A, 1206B, 1206C, and one of the UEs 1212, 1214 of Figure 12, respectively. This is to say, the inner workings of these entities may be as shown in Figure 13 and independently, the surrounding network topology may be that of Figure 12.

In Figure 13, the OTT connection 1316 has been drawn abstractly to illustrate the communication between the host computer 1302 and the UE 1314 via the base station 1318 without explicit reference to any intermediary devices and the precise routing of messages via these devices. The network infrastructure may determine the routing, which may be configured to hide from the UE 1314 or from the service provider operating the host computer 1302, or both. While the OTT connection 1316 is active, the network infrastructure may further take decisions by which it dynamically changes the routing (e.g., on the basis of load balancing consideration or reconfiguration of the network).

The wireless connection 1326 between the UE 1314 and the base station 1318 is in accordance with the teachings of the embodiments described throughout this disclosure. One or more of the various embodiments improve the performance of OTT services provided to the UE 1314 using the OTT connection 1316, in which the wireless connection 1326 forms the last segment. More precisely, the teachings of these embodiments may improve e.g., the data rate, latency, and/or power consumption and thereby provide benefits such as e.g., reduced user waiting time, relaxed restriction on file size, better responsiveness, and/or extended battery lifetime

A measurement procedure may be provided for the purpose of monitoring data rate, latency, and other factors on which the one or more embodiments improve. There may further be an optional network functionality for reconfiguring the OTT connection 1316 between the host computer 1302 and the UE 1314, in response to variations in the measurement results. The measurement procedure and/or the network functionality for reconfiguring the OTT connection 1316 may be implemented in the software 1310 and the hardware 1304 of the host computer 1302 or in the software 1340 and the hardware 1334 of the UE 1314, or both. In some embodiments, sensors (not shown) may be deployed in or in association with communication devices through which the OTT connection 1316 passes; the sensors may participate in the measurement procedure by supplying values of the monitored quantities exemplified above, or supplying values of other physical quantities from which the software 1310, 1340 may compute or estimate the monitored quantities. The reconfiguring of the OTT connection 1316 may include message format, retransmission settings, preferred routing, etc.; the reconfiguring need not affect the base station 1318, and it may be unknown or imperceptible to the base station 1318. Such procedures and functionalities may be known and practiced in the art. In certain embodiments, measurements may involve proprietary UE signaling facilitating the host computer 1302's measurements of throughput, propagation times, latency, and the like. The measurements may be implemented in that the software 1310 and 1340 causes messages to be transmitted, in particular empty or 'dummy' messages, using the OTT connection 1316 while it monitors propagation times, errors, etc.

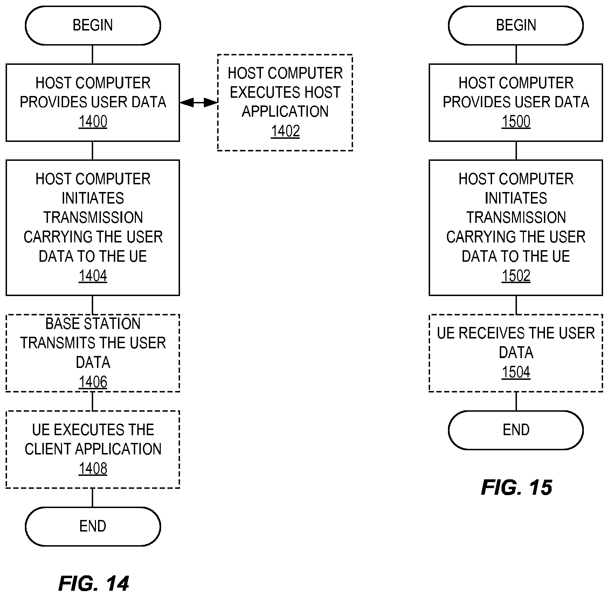

Figure 14 is a flowchart illustrating a method implemented in a communication system, in accordance with one embodiment. The communication system includes a host computer, a base station, and a UE which may be those described with reference to Figures 12 and 13. For simplicity of the present disclosure, only drawing references to Figure 14 will be included in this section. In step 1400, the host computer provides user data. In sub-step 1402 (which may be optional) of step 1400, the host computer provides the user data by executing a host application. In step 1404, the host computer initiates a transmission carrying the user data to the UE. In step 1406 (which may be optional), the base station transmits to the UE the user data which was carried in the transmission that the host computer initiated, in accordance with the teachings of the embodiments described throughout this disclosure. In step 1408 (which may also be optional), the UE executes a client application associated with the host application executed by the host computer.

Figure 15 is a flowchart illustrating a method implemented in a communication system, in accordance with one embodiment. The communication system includes a host computer, a base station, and a UE which may be those described with reference to Figures 12 and 13. For simplicity of the present disclosure, only drawing references to Figure 15 will be included in this section. In step 1500 of the method, the host computer provides user data. In an optional sub-step (not shown) the host computer provides the user data by executing a host application. In step 1502, the host computer initiates a transmission carrying the user data to the UE. The transmission may pass via the base station, in accordance with the teachings of the embodiments described throughout this disclosure. In step 1504 (which may be optional), the UE receives the user data carried in the transmission.

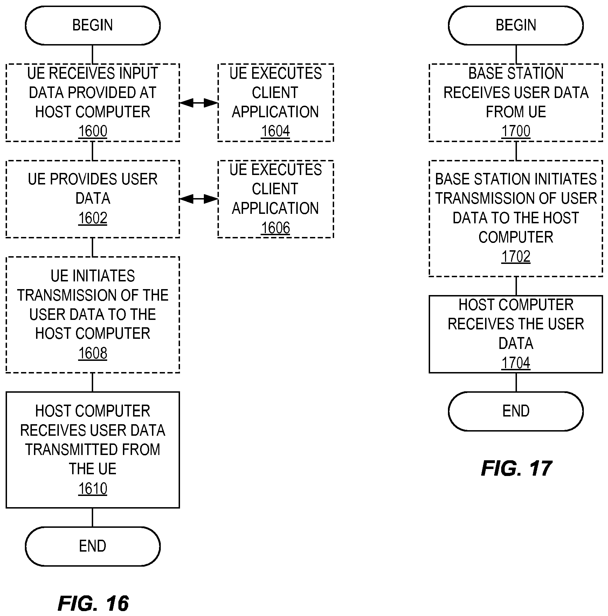

Figure 16 is a flowchart illustrating a method implemented in a communication system, in accordance with one embodiment. The communication system includes a host computer, a base station, and a UE which may be those described with reference to Figures 12 and 13. For simplicity of the present disclosure, only drawing references to Figure 16 will be included in this section. In step 1600 (which may be optional), the UE receives input data provided by the host computer. Additionally or alternatively, in step 1602 (which may be optional), the UE provides user data. In sub-step 1604 (which may be optional) of step 1600, the UE provides the user data by executing a client application. In sub-step 1606 (which may be optional) of step 1602, the UE executes a client application which provides the user data in reaction to the received input data provided by the host computer. In providing the user data, the executed client application may further consider user input received from the user. Regardless of the specific manner in which the user data was provided, the UE initiates, in sub-step 1608 (which may be optional), transmission of the user data to the host computer. In step 1610 of the method, the host computer receives the user data transmitted from the UE, in accordance with the teachings of the embodiments described throughout this disclosure.

Figure 17 is a flowchart illustrating a method implemented in a communication system, in accordance with one embodiment. The communication system includes a host computer, a base station, and a UE which may be those described with reference to Figures 12 and 13. For simplicity of the present disclosure, only drawing references to Figure 17 will be included in this section. In step 1700 (which may be optional), in accordance with the teachings of the embodiments described throughout this disclosure, the base station receives user data from the UE. In step 1702 (which may be optional), the base station initiates transmission of the received user data to the host computer. In step 1704 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • AF | Application Function |
| • AMF | Access and Mobility Management Function |
| • AN | Access Network |
| • AP | Access Point |
| • API | Application Program Interface |
| • APN | Access Point Name |
| • AS | Application Server |
| • ASIC | Application Specific Integrated Circuit |
| • AUSF | Authentication Server Function |
| • CIoT | Cellular Internet of Things |
| • CPU | Central Processing Unit |
| • DN | Data Network |
| • DSP | Digital Signal Processor |
| • eNB | Enhanced or Evolved Node B |
| • E-UTRAN | Evolved Universal Terrestrial Radio Access Network |
| • FPGA | Field Programmable Gate Array |
| • GERAN | Global System for Mobile Communications Enhanced Data Rates for Global System for Mobile Communications Evolution Radio Access Network |
| • gNB | New Radio Base Station |
| .• HSS | Home Subscriber Service |
| • IoT | Internet of Things |
| • IP | Internet Protocol |
| • LTE | Long Term Evolution |
| • MME | Mobility Management Entity |
| • MNRF | Mobile-Station-Not-Reachable-Flag |
| • MSISDN | Mobile Station International Subscriber Directory Number |
| • MTC | Machine Type Communication |
| • NB-IoT | Narrowband Internet of Things |
| • NEF | Network Exposure Function |
| • NF | Network Function |
| • NIDD | Non-IP Data Delivery |
| • NR | New Radio |
| • NRF | Network Repository Function |
| • NSSF | Network Slice Selection Function |
| • OTT | Over-the-Top |
| • PCF | Policy Control Function |
| • PDN | Packet Data Network |
| • PDU | Protocol Data Unit |
| • P-GW | Packet Data Network Gateway |
| • PSM | Power Saving Mode |
| • QoS | Quality of Service |
| • RAM | Random Access Memory |
| • RAN | Radio Access Network |
| • RAU | Routing Area Update |
| • ROM | Read Only Memory |
| • RRH | Remote Radio Head |
| • RTT | Round Trip Time |
| • SCEF | Service Capability Exposure Function |
| • SCS | Services Capability Server |
| • SCS/AS | Services Capability Server / Application Server |
| • SGSN | Serving General Packet Radio Service Support Node |
| • SMF | Session Management Function |
| • TAU | Tracking Area Update |
| • TLTRI | T8 Long Term Transaction Reference ID |
| • TS | Technical Specification |
| • UDM | Unified Data Management |
| • UE | User Equipment |
| • UPF | User Plane Function |
| • UTRAN | Universal Terrestrial Radio Access Network |

Those skilled in the art will recognize improvements and modifications to the embodiments of the present disclosure. All such improvements and modifications are considered within the scope of the concepts disclosed herein.

## Claims

1. A method performed by a first entity for reporting wireless device connectivity events, the method comprising:
- determining (400) that connectivity events have occurred for a group of wireless devices; and
- communicating (402) to a second entity that the connectivity events have occurred for the wireless devices, wherein multiple responses for the wireless devices of the group are accumulated within a Group Reporting Guard Time, and after expiration of the Group Reporting Guard Time a Monitoring Indication is sent with the accumulated responses and indicating whether the Monitoring Indication is an intermediate message or the last message for the group.

2. The method of claim 1, wherein the connectivity event that has occurred for the wireless device is a connectivity establishment.

3. The method of claim 2, wherein the connectivity establishment is a Packet Data Network, PDN, Connectivity creation.

4. The method of claim 2, wherein the connectivity establishment is a Protocol Data Unit, PDU, Session creation.

5. The method of claim 1, wherein the connectivity event that has occurred for the wireless device is a connectivity disconnection.

6. The method of claim 5, wherein the connectivity disconnection is a Packet Data Network, PDN, Connectivity deletion.

7. The method of claim 5, wherein the connectivity disconnection is a Protocol Data Unit, PDU, Session deletion.

8. The method of any of claims 1 to 7, wherein communicating to the second entity that the connectivity event has occurred for the wireless device comprises communicating at least one of the group consisting of: an Internet Protocol, IP, address of the wireless device, a PDN Type of the connectivity event, and an Access Point Name, APN, of the wireless device.

9. The method of claims 1 through 8, wherein the connectivity event that has occurred for the wireless device is a change of the IP address of the connectivity.

10. The method of any of claims 1 to 9, wherein the first entity is a Home Subscriber Service, HSS, the second entity is a Service Capability Exposure Function, SCEF, and communicating to the SCEF that the connectivity event has occurred for the wireless device comprises sending a Monitoring Event Response to the SCEF.

11. The method of any of claims 1 to 10, wherein the first entity is the SCEF, the second entity is a Services Capability Server / Application Server, SCS/AS, and communicating to the SCS/AS that the connectivity event has occurred for the wireless device comprises sending the Monitoring Event Response to the SCS/AS.

12. The method of any of claims 10 to 11, wherein communicating to the second entity that the connectivity event has occurred for the wireless device comprises establishing a T6a/T6b connection towards the SCEF.

13. A first entity for reporting wireless device connectivity events, the first entity comprising at least one processor and memory comprising instructions executable by the at least one processor whereby the first entity is operable to:
- determine that connectivity events have occurred for a group of wireless devices; and
- communicate to a second entity that the connectivity events have occurred for the wireless devices, wherein multiple responses for the wireless devices of the group are accumulated within a Group Reporting Guard Time, and after expiration of the Group Reporting Guard Time a Monitoring Indication is sent with the accumulated responses and indicating whether the Monitoring Indication is an intermediate message or the last message for the group.

14. The first entity of claim 13, wherein communicating to the second entity that the connectivity event has occurred for the wireless device comprises being operable to communicate at least one of the group consisting of: an Internet Protocol, IP, address of the wireless device, a PDN Type of the connectivity event, and an Access Point Name, APN, of the wireless device.

15. The first entity of claims 13 through 14, wherein the connectivity event that has occurred for the wireless device is a change of the IP address of the connectivity.

16. The first entity of any of claims 13 to 15, wherein the first entity is a Home Subscriber Service, HSS, the second entity is a Service Capability Exposure Function, SCEF, and communicating to the SCEF that the connectivity event has occurred for the wireless device comprises sending a Monitoring Event Response to the SCEF.

17. The first entity of any of claims 13 to 16, wherein the first entity is the SCEF, the second entity is a Services Capability Server / Application Server, SCS/AS, and communicating to the SCS/AS that the connectivity event has occurred for the wireless device comprises sending the Monitoring Event Response to the SCS/AS.

18. The first entity of any of claims 16 to 17, wherein a Reachability Type for the Monitoring Event Response is a "PDN Connectivity Status".

19. The first entity of any of claims 16 to 17, wherein a Monitoring Event configuration includes a "PDN Connectivity Status Indication".

20. The first entity of any of claims 16 to 17, wherein a Monitoring Event configuration includes a "PDN Connectivity Status" as a new Monitoring Event Type.

21. The first entity of any of claims 16 to 20, wherein communicating to the second entity that the connectivity event has occurred for the wireless device comprises being operable to establish a T6a/T6b connection towards the SCEF.

## Patentansprüche

1. Verfahren, das von einer ersten Entität zur Meldung von Konnektivitätsereignissen einer drahtlosen Vorrichtung durchgeführt wird, wobei das Verfahren umfasst:
- Bestimmen (400), dass Konnektivitätsereignisse bei einer Gruppe von drahtlosen Vorrichtungen aufgetreten sind; und
- Mitteilung (402) an eine zweite Entität, dass die Konnektivitätsereignisse bei den drahtlosen Vorrichtungen aufgetreten sind, wobei mehrere Antworten bei den drahtlosen Vorrichtungen der Gruppe innerhalb einer Gruppenmeldungs-Überwachungszeit akkumuliert werden und nach Ablauf der Gruppenmeldungs-Überwachungszeit eine Überwachungsanzeige mit den akkumulierten Antworten gesendet wird, die anzeigt, ob die Überwachungsanzeige eine Zwischenmeldung oder die letzte Meldung für die Gruppe ist.

2. Verfahren nach Anspruch 1, wobei es sich bei dem Konnektivitätsereignis, das bei der drahtlosen Vorrichtung aufgetreten ist, um einen Konnektivitätsaufbau handelt.

3. Verfahren nach Anspruch 2, wobei es sich bei dem Konnektivitätsaufbau um eine Erstellung einer Konnektivität über ein Paketdatennetz, PDN, handelt.

4. Verfahren nach Anspruch 2, wobei es sich bei dem Konnektivitätsaufbau um eine Erstellung einer Protokolldateneinheits-, PDU-, Sitzung handelt.

5. Verfahren nach Anspruch 1, wobei es sich bei dem Konnektivitätsereignis, das bei der drahtlosen Vorrichtung aufgetreten ist, um eine Konnektivitätsunterbrechung handelt.

6. Verfahren nach Anspruch 5, wobei es sich bei der Konnektivitätsunterbrechung um eine Löschung der Paketdatennetzwerk-, PDN-, Konnektivität handelt.

7. Verfahren nach Anspruch 5, wobei es sich bei der Konnektivitätsunterbrechung um eine Löschung der Protokolldateneinheits-, PDU-, Sitzung handelt.

8. Verfahren nach einem der Ansprüche 1 bis 7, wobei die Mitteilung an die zweite Entität, dass das Konnektivitätsereignis bei dem drahtlosen Gerät aufgetreten ist, die Mitteilung von mindestens einem aus der Gruppe umfasst, die besteht aus: einer Internetprotokoll-IP-Adresse der drahtlosen Vorrichtung, einem PDN-Typ des Konnektivitätsereignisses und einem Zugangspunktnamen, APN, der drahtlosen Vorrichtung.

9. Verfahren nach einem der Ansprüche 1 bis 8, wobei es sich bei dem aufgetretenen Konnektivitätsereignis bei der drahtlosen Vorrichtung um eine Änderung der IP-Adresse der Konnektivität handelt.

10. Verfahren nach einem der Ansprüche 1 bis 9, wobei die erste Entität ein Home Subscriber Service, HSS, ist, die zweite Entität eine Service Capability Exposure Function, SCEF, ist und die Mitteilung an die SCEF, dass das Konnektivitätsereignis bei der drahtlosen Vorrichtung aufgetreten ist, das Senden einer Ereignisüberwachungsantwort an die SCEF umfasst.

11. Verfahren nach einem der Ansprüche 1 bis 10, wobei die erste Entität die SCEF ist, die zweite Entität ein Services Capability Server / Application Server, SCS/AS, ist und die Mitteilung an den SCS/AS, dass das Konnektivitätsereignis bei der drahtlosen Vorrichtung aufgetreten ist, das Senden der Ereignisüberwachungsantwort an den SCS/AS umfasst.

12. Verfahren nach einem der Ansprüche 10 bis 11, wobei die Mitteilung an die zweite Entität, dass das Konnektivitätsereignis, das bei der drahtlosen Vorrichtung aufgetreten ist, den Aufbau einer T6a/T6b-Verbindung in Richtung der SCEF umfasst.

13. Erste Entität zur Meldung von Konnektivitätsereignissen einer drahtlosen Vorrichtung, wobei die erste Entität mindestens einen Prozessor und einen Speicher umfasst, der Anweisungen enthält, die von dem mindestens einen Prozessor ausgeführt werden können, wodurch die erste Entität betreibbar ist zum:
- Bestimmen, dass Konnektivitätsereignisse bei einer Gruppe von drahtlosen Vorrichtungen aufgetreten sind; und
- Mitteilung an eine zweite Entität, dass die Konnektivitätsereignisse bei den drahtlosen Vorrichtungen aufgetreten sind, wobei mehrere Antworten bei den drahtlosen Vorrichtungen der Gruppe innerhalb einer Gruppenmeldungs-Überwachungszeit akkumuliert werden und nach Ablauf der Gruppenmeldungs-Überwachungszeit eine Überwachungsanzeige mit den akkumulierten Antworten und der Angabe, ob die Überwachungsanzeige eine Zwischenmeldung oder die letzte Meldung für die Gruppe ist, gesendet wird.

14. Erste Entität nach Anspruch 13, wobei die Mitteilung an die zweite Entität, dass das Konnektivitätsereignis bei der drahtlosen Vorrichtung aufgetreten ist, umfasst, dass sie betreibbar ist, mindestens eines aus der Gruppe zu mitzuteilen, die besteht aus: einer Internetprotokoll-, IP-, Adresse der drahtlosen Vorrichtung, einem PDN-Typ des Konnektivitätsereignisses und einem Zugangspunktnamen, APN, der drahtlosen Vorrichtung.

15. Erste Entität nach Anspruch 13 bis 14, wobei das aufgetretene Konnektivitätsereignis bei der drahtlosen Vorrichtung eine Änderung der IP-Adresse der Konnektivität ist.

16. Erste Entität nach einem der Ansprüche 13 bis 15, wobei die erste Entität ein Home Subscriber Service, HSS, ist, die zweite Entität eine Service Capability Exposure Function, SCEF, ist und die Mitteilung an die SCEF, dass das Konnektivitätsereignis bei der drahtlosen Vorrichtung aufgetreten ist, das Senden einer Ereignisüberwachungsantwort an die SCEF umfasst.

17. Erste Entität nach einem der Ansprüche 13 bis 16, wobei die erste Entität die SCEF ist, die zweite Entität ein Services Capability Server / Application Server, SCS/AS, ist und die Mitteilung an den SCS/AS, dass das Konnektivitätsereignis bei der drahtlosen Vorrichtung aufgetreten ist, das Senden der Ereignisüberwachungsantwort an den SCS/AS umfasst.

18. Erste Entität nach einem der Ansprüche 16 bis 17, wobei ein Erreichbarkeitstyp für die Ereignisüberwachungsantwort ein "PDN-Konnektivitätsstatus" ist.

19. Erste Entität nach einem der Ansprüche 16 bis 17, wobei eine Ereignisüberwachungskonfiguration eine "PDN Konnektivitätsstatusanzeige" beinhaltet.

20. Erste Entität nach einem der Ansprüche 16 bis 17, wobei eine Ereignisüberwachungskonfiguration einen "PDN-Konnektivitätsstatus" als neuen Ereignisüberwachungstyp beinhaltet.

21. Erste Entität nach einem der Ansprüche 16 bis 20, wobei die Mitteilung an die zweite Entität, dass das Konnektivitätsereignis bei der drahtlosen Vorrichtung aufgetreten ist, die Betreibbarkeit umfasst, eine T6a/T6b-Verbindung in Richtung der SCEF aufzubauen.

## Revendications

1. Procédé effectué par une première entité pour rapporter des événements de connectivité de dispositif sans fil, le procédé comprenant :
- la détermination (400) que des événements de connectivité se sont produits pour un groupe de dispositifs sans fil ; et
- la communication (402) à une seconde entité que les événements de connectivité se sont produits pour les dispositifs sans fil, dans lequel des réponses multiples pour les dispositifs sans fil du groupe sont accumulées dans un temps de garde de rapport de groupe, et après l'expiration du temps de garde de rapport de groupe, une indication de contrôle est envoyée avec les réponses accumulées et indiquant si l'indication de contrôle est un message intermédiaire ou le dernier message pour le groupe.

2. Procédé selon la revendication 1, dans lequel l'événement de connectivité qui s'est produit pour le dispositif sans fil est un établissement de connectivité.

3. Procédé selon la revendication 2, dans lequel l'établissement de connectivité est une création de connectivité de réseau de données de paquets, PDN.

4. Procédé selon la revendication 2, dans lequel l'établissement de connectivité est une création de session d'unité de données de protocole, PDU.

5. Procédé selon la revendication 1, dans lequel l'événement de connectivité qui s'est produit pour le dispositif sans fil est une déconnexion de connectivité.

6. Procédé selon la revendication 5, dans lequel la déconnexion de connectivité est une suppression de connectivité de réseau de données de paquet, PDN.

7. Procédé selon la revendication 5, dans lequel la déconnexion de connectivité est une suppression de session d'unité de données de protocole, PDU.

8. Procédé selon l'une quelconque des revendications 1 à 7, dans lequel la communication à la seconde entité que l'événement de connectivité s'est produit pour le dispositif sans fil comprend la communication d'au moins un du groupe consistant en :
une adresse de protocole Internet, IP, du dispositif sans fil, un type PDN de l'événement de connectivité, et un nom de point d'accès, APN, du dispositif sans fil.

9. Procédé selon la revendication 1 à 8, dans lequel l'événement de connectivité qui s'est produit pour le dispositif dans fil est un changement de l'adresse IP de la connectivité.

10. Procédé selon l'une quelconque des revendications 1 à 9, dans lequel la première entité est un service de souscription à domicile, HSS, la seconde entité est une fonction d'exposition de capacités de service, SCEF, et la communication à la SCEF que l'événement de connectivité s'est produit pour le dispositif sans fil comprend l'envoi d'une réponse d'événement de contrôle à la SCEF.

11. Procédé selon l'une quelconque des revendications 1 à 10, dans lequel la première entité est la SCEF, la seconde entité est un serveur de capacité de services / serveur d'application, SCS/AS, et la communication au SCS/AS que l'événement de connectivité s'est produit pour le dispositif sans fil comprend l'envoi de la réponse d'événement de contrôle au SCS/AS.

12. Procédé selon l'une quelconque des revendications 10 à 11, dans lequel la communication à la seconde entité que l'événement de connectivité s'est produit pour le dispositif sans fil comprend l'établissement d'une connexion T6a/T6b vers la SCEF.

13. Première entité pour rapporter des événements de connectivité du dispositif sans fil, la première entité comprenant au moins un processeur et une mémoire comprenant des instructions exécutables par le au moins un processeur selon lequel la première entité fonctionne pour :
- déterminer que des événements de connectivité se sont produits pour un groupe de dispositif sans fil ; et
- communiquer à une seconde entité que les événements de connectivité se sont produits pour les dispositifs sans fil, dans laquelle des réponses multiples pour les dispositifs sans fil du groupe sont accumulées dans un temps de garde de rapport de groupe, et après l'expiration du temps de garde de rapport de groupe, une indication de contrôle est envoyée avec les réponses accumulées et indiquant si l'indication de contrôle est un message intermédiaire ou le dernier message pour le groupe.

14. Première entité selon la revendication 13, dans laquelle la communication à la seconde entité que l'événement de connectivité s'est produit pour le dispositif sans fil comprend le fait de pouvoir fonctionner pour communiquer au moins un du groupe consistant en : une adresse de protocole Internet, IP, un type PDN de l'événement de connectivité, et un nom de point d'accès, APN, du dispositif sans fil.

15. Première entité selon les revendications 13 à 14, dans laquelle l'événement de connectivité qui s'est produit pour le dispositif sans fil est un changement de l'adresse IP de la connectivité.

16. Première entité selon l'une quelconque des revendications 13 à 15, dans laquelle la première entité est un service de souscription à domicile, HSS, la seconde entité est une fonction d'exposition de capacités de service, SCEF, et la communication à la SCEF que l'événement de connectivité s'est produit pour le dispositif dans fil comprend l'envoi d'une réponse d'événement de contrôle à la SCEF.

17. Première entité selon les revendications 13 à 16, dans laquelle la première entité est la SCEF, la seconde entité est un serveur de capacité de services / serveur d'application, SCS/AS, et la communication au SCS/AS que l'événement de connectivité s'est produit pour le dispositif sans fil comprend l'envoi de la réponse d'événement de contrôle au SCS/AS.

18. Première entité selon les revendications 16 à 17, dans laquelle un type d'accessibilité pour la réponse d'événement de contrôle est un « statut de connectivité PDN ».

19. Première entité selon les revendications 16 à 17, dans laquelle une configuration d'événement de contrôle inclut une « indication de statut de connectivité PDN ».

20. Première entité selon les revendications 16 à 17, dans laquelle une configuration d'événement de contrôle inclut un « statut de connectivité PDN » en tant que nouveau type d'événement de contrôle.

21. Première entité selon les revendications 16 à 20, dans laquelle la communication à la seconde entité que l'événement de connectivité s'est produit pour le dispositif sans fil comprend le fait de fonctionner pour établir une connexion T6a/T6b vers la SCEF.
